(19) Europäisches Patentamt
European Patent Office
Office européen des brevets

(11) **EP 2 288 859 B1**

(12) **EUROPEAN PATENT SPECIFICATION**

(45) Date of publication and mention
of the grant of the patent:
**05.08.2015 Bulletin 2015/32**

(51) Int Cl.:
***F25B 49/02*** *(2006.01)*

(21) Application number: **08773613.8**

(22) Date of filing: **24.06.2008**

(86) International application number:
**PCT/EP2008/005103**

(87) International publication number:
**WO 2009/155941 (30.12.2009 Gazette 2009/53)**

(54) **METHOD OF CONTROLLING AN AIR COOLED HEAT EXCHANGER**

VERFAHREN ZUR STEUERUNG EINES LUFTGEKÜHLTEN WÄRMETAUSCHERS

PROCÉDÉ DE RÉGULATION D'UN ÉCHANGEUR DE CHALEUR REFROIDI PAR AIR

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**02.03.2011 Bulletin 2011/09**

(73) Proprietor: **Carrier Corporation
Farmington, CT 06034 (US)**

(72) Inventor: **GASSEN, Heinz
55246 Mainz-Kostheim (DE)**

(74) Representative: **Klunker . Schmitt-Nilson . Hirsch
Patentanwälte
Destouchesstraße 68
80796 München (DE)**

(56) References cited:
**EP-A- 0 004 448     EP-A- 1 795 837
WO-A-2006/050133     US-A- 3 390 539
US-A- 3 853 174     US-A- 5 230 223**

• YANN QUIQUENPOIS: "PRESSION DE CONDENSATION METHODES DE CONTROLE" REVUE PRATIQUE DU FROID ET DU CONDITIONNEMENT D'AIR, PYC EDITION SA., PARIS, FR, no. 828, 2 November 1995 (1995-11-02), pages 24-26, XP000539848 ISSN: 0370-6699

**Description**

The invention relates to a method of controlling an air cooled heat exchanger and a refrigerating system adapted to carry out said method.

Refrigerating systems whose condensers are cooled by a plurality of fans are well-known in the art. It is also known to use these fans to control the temperature of the refrigerant in the condenser. Prior art systems employ a plurality of fans with individual on/off switches. For lowering the refrigerant temperature in the condenser additional fans are turned on, for raising the temperature fans are switched off. However, these jumps in cooling performance do not allow for an accurate and efficient control of the refrigerant temperature in the condenser.

US 5,230,223 discloses a refrigeration control system for operating a refrigeration system by controlling the refrigerant pressure in the refrigerant line between the liquid receiver and the evaporator at a pressure which is just above that at which bubbles ("flashgas") occur. Some of the devices that can be controlled by the system controller include condenser fans, pressure control valves, reciprocating compressors, and screw compressors.

Accordingly, it would be beneficial to provide an accurate and efficient control of an air cooled heat exchanger over a wide range of operating conditions.

Such control is achieved in accordance with the invention by the method of controlling an air cooled heat exchanger as claimed in claims 1 and 9 as well as by the refrigerating system as claimed in claim 13.

In particular, it is disclosed a method of controlling an air cooled heat exchanger. The method comprises the steps of providing an air cooled heat exchanger having a plurality of fans, each fan having a maximum fan speed and an individual enable/disable switch; running at least one fan; determining a deviation by comparing an actual temperature or pressure value at the air cooled heat exchanger with a reference temperature or pressure value; calculating a fan speed control value from the deviation; in case the fan speed control value reaches an upper fan speed limit value, lowering the fan speed control value and enabling an additional fan; and running the enabled fans based on the fan speed control value.

It is further disclosed another method of controlling an air cooled heat exchanger. The method comprises the steps of providing an air cooled heat exchanger having a plurality of fans, each fan having a maximum fan speed and an individual enable/disable switch; running at least two fans; determining a deviation by comparing an actual temperature or pressure value at the air cooled heat exchanger with a reference temperature or pressure value; calculating a fan speed control value from the deviation; in case the fan speed control value reaches a lower fan speed limit value, raising the fan speed control value and disabling one of the fans; and running the enabled fans based on the fan speed control value.

Embodiments of the invention are described in greater detail below with reference to the figures wherein:

FIG. 1 shows a schematic of the fans of an air cooled heat exchanger and the controlling means thereof;

FIG. 2 shows a block diagram illustrating an exemplary signal flow for controlling the fans;

FIG. 3 shows an exemplary function of the fan speed over time in the case of a persisting positive control deviation.

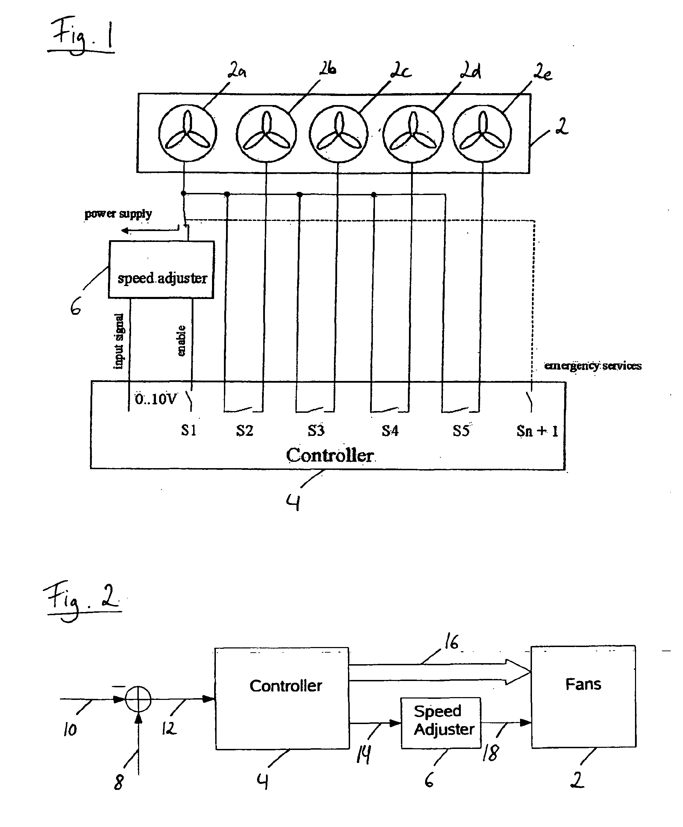

FIG. 1 shows an array of five fans 2, which are oriented to blow air at a heat exchanger and are controlled in accordance with an exemplary embodiment of the present invention. The fans 2 are designed in a way that a supplied control voltage determines the fan speed. When connected to the power supply, the fans 2 run at the nominal fan speed. The fans 2 have a maximum fan speed $S_{max}$, which may be equal to the nominal fan speed or may be higher.

The first fan 2a is connected to a voltage control node, which in turn is connected to a speed adjuster 6. The speed adjuster 6 is connected to the controller 4 via two lines, an input signal line and an enable line. The controller 4 comprises an input (not shown) for receiving a temperature or pressure value and computing means (not shown). The computing means may be implemented in analogue technology or digital technology, in hardware or software, in any combination of these options, or in any other suitable manner. In an exemplary embodiment, the computing means may comprise a processor, a nonvolatile memory (e.g. ROM) for storing program data and/or parameters, and a volatile memory (e.g. RAM) for storing intermediate results and/or previous inputs.

The controller 4 comprises a switch S1, which connects/disconnects the enable line between the speed adjuster 6 and the controller 4 using a predetermined enable voltage. Furthermore, controller 4 comprises switches S2, S3, S4, and S5. Each switch connects one fan to the control voltage node, respectively. In other words, S2 opens/closes a connection from the control voltage node to fan 2b, S3 opens/closes a connection from the control voltage node to fan 2c, etc.

The controller 4 comprises a further switch Sn+1. Switch Sn+1 establishes a connection to an emergency services line, which controls a switch for switching between the control voltage node being connected to the speed adjuster 6 and the control voltage node being connected to the power supply.

The controlling operation of the fans 2 according to the exemplary embodiment of FIG. 1 is explained as follows:

The computing means of the controller 4 compute a desired fan speed and determine, which of the fans 2 are enabled. Based on these results, appropriate ones of the switches S1-S5 are closed. S1 implicitly switches on fan 2a, as S1 enables the speed adjuster 6, whose output controls the voltage at the control voltage node in normal operation, which fan 2a in turn is connected to. Switches S2-S5 directly control the connection between the voltage control node and the fans 2b-2e, respectively. However, as S1 enables the speed adjuster in the exemplary embodiment of Figure 1, the switches S2-S5 enabling the fans 2b-2e is contingent on S1 being closed. The controller 4 outputs a fan speed control value indicating the desired fan speed to the speed adjuster 6 via the input signal line. In the exemplary embodiment of FIG. 1, the fan speed control value has a voltage value between 0 Volt and 10 Volt, which the speed adjuster 6 is able to interpret as a desired fan speed. As is apparent to a person skilled in the art, that communication between the controller and the speed adjuster may be effected by various signals with various signal ranges. Having knowledge about the fan speed dependency on the supplied voltage, the speed adjuster 6 holds the control voltage node to a value appropriate for causing the fans to run at the desired fan speed. It is understood that this voltage control of the fans is exemplary only. However, using DC-controlled fans provides for a particularly intuitive example. The speed adjuster 6 may also comprise a frequency converter or a phase control or other means to achieve the desired fan speed. The speed adjuster may be able to provide power to the fans in a way that causes them to run at a higher fan speed than their nominal fan speed when connected to the power supply.

As mentioned above, the controller 4 receives an actual temperature or pressure value of the air cooled heat exchanger as an input. This value is measured by a sensor. The sensor is placed at an appropriate location. In case pressure is sensed, the sensor is placed in the refrigerant portion of the air cooled heat exchanger. In case temperature is sensed, the sensor may be placed inside the refrigerant portion or about, preferably in close proximity of, the refrigerant portion of the air cooled heat exchanger. The controller 4 either receives a reference temperature or pressure value as an additional input or has said reference temperature or pressure value stored internally. By subtracting the reference temperature or pressure value from the actual temperature or pressure value the controller 4 computes a deviation value, which is also referred to as a control error hereinafter. This deviation may also be computed outside of the controller 4 and readily supplied to it as an input.

The controller 4 determines, which fans are enabled and computes the fan speed control value based on said deviation value and a number of parameters. In the exemplary embodiment, the parameters comprise the maximum fan speed $S_{max}$ mentioned above, a lower fan speed limit value $S_{LL}$, and an upper fan speed limit value $S_{UL}$. The lower fan speed limit $S_{LL}$ value is a value, under which the fans should not be run. This value may be the product of different considerations. For example, the efficiency of a fan may be unacceptable below said lower fan speed limit value $S_{LL}$, or the fan may cause resonances at a frequency that is dangerous for other parts of the system. Usually the lower fan speed limit value $S_{LL}$ is below 20% of the maximum fan speed $S_{max}$; preferably it lies between 10% and 15% of the maximum fan speed $S_{max}$.

Similarly, a number of considerations lead to setting an upper fan speed limit value $S_{UL}$, above which the fans 2 should not be run, unless specific circumstances, for example the need for an emergency operation, arise. These considerations may comprise the decreased efficiency of fans above a certain fan speed or the increased noise generated by the fans running at an increased fan speed or others. A typical upper fan speed limit value $S_{UL}$ is derived by adding a value from 40% to 60% of the maximum fan speed $S_{max}$ to the lower fan speed limit value $S_{LL}$, depending on the considerations outlined above and other system aspects.

In the exemplary embodiment of FIG. 1, the controller 4 keeps the fan speed control value below the upper fan speed limit value $S_{UL}$, at least as long as not all fans are enabled. It may also be preferable that the controller 4 further keeps the fan speed control value above the lower fan speed limit value $S_{LL}$. For an efficient control of the air cooled heat exchanger, the controller 4 sets the fan enable switches and the fan speed control value appropriately.

The controlling operation of the controller 4 shall be described in more detail, starting with an example for the sake of clarity. At a given point in time $t_0$, a given number of fans, for example 2 (2a, 2b), are running at a given fan speed, for example 30% of the maximum fan speed $S_{max}$. The lower fan speed limit value $S_{LL}$ and the upper fan speed limit value $S_{UL}$ may in this example be 10% and 50% of the maximum fan speed $S_{max}$, respectively. As the fan speed has an influence on the performance of the air cooled heat exchanger, the controller 4 uses the fan speed control value to control the actual temperature or pressure in or around the air cooled heat exchanger. The controller 4 adjusts the fan speed control value in order for the actual temperature or pressure value to reach the desired reference temperature or pressure value, i.e. to zero out the control error.

Many algorithms for adjusting a control value, in this case the fan speed control value, based on either the current control error value only or the current control error value and previous control error values are well-known in the art. Such control algorithms include for example P-, PI-, and PID-controls. The parameters of these control algorithms may be adapted to the particular system to be controlled. An in-depth discussion of these algorithms shall be omitted for brevity. Although the use of the aforementioned and other controls is generally possible with the present invention, it has been found that controllers implementing the PI-control yielded the best results. PI-controls are efficient at making the control error zero without exhibiting too sensitive reactions to temporary fluctuations. Regardless of the particular algorithm used, the term "control algorithm" shall be used hereinafter as a general term for an appropriate algorithm.

Using the control algorithm, the controller 4 may for a certain series of control errors increase the fan speed control value, in the foregoing example above 30% of the maximum fan speed $S_{max}$. Before the controller 4 outputs the fan speed control value to the speed adjuster 6, it performs a check whether the fan speed control value is below the upper fan speed limit value $S_{UL}$. If the fan speed control value equals (possibly +/- some little tolerance) the upper fan speed limit value $S_{UL}$, the controller 4 of the embodiment of Fig. 1 will carry out two actions: enabling an additional fan, in the foregoing example fan 2c, and lowering the fan speed control value to an updated fan speed control value. As reaching the upper fan speed limit value $S_{UL}$ shows that the fans are on the border of being run in an undesired fan speed range, enabling an additional fan is the preferred means to raise the cooling performance of the air cooled heat exchanger. The lowering of the fan speed control value, associated with the enabling of an additional fan, is important to reduce the jump in cooling performance caused by the enabling of an additional fan. In the foregoing example the updated fan speed control value may be 40% of the maximum fan speed $S_{max}$, which is the new staring point for the control algorithm. In general terms, the control algorithm implemented in the controller 4 has to handle this "overruling" by the controller 4, associated with the enabling of an additional fan, and operate with an updated value for the fan speed control value, i.e. the output value of the control algorithm.

Similarly, when the fan speed control value reaches the lower fan speed limit value $S_{LL}$, the controller 4 of the embodiment of Fig. 1 will disable one of the running fans and will raise the fan speed control value to an updated value, before outputting it to the speed adjuster 6.

A special case arises when all fans 2a-2e are running. When the fan speed control value reaches the upper fan speed limit value $S_{UL}$ in this scenario, the controller 4 cannot enable an additional fan. Therefore, it ignores the upper fan speed limit value $S_{UL}$ as the border of the desired fan speed range. The control algorithm may then, depending on the development of the control error, raise the fan speed control value up to the maximum fan speed $S_{max}$. The controller 4 also comprises a switch Sn+1, which connects fan 2a and the fans 2b-2e, which are enabled by their respective switches S2-S5, to the power supply. Connected to the power supply, they will run at their nominal fan speed. This gives the controller 4 a means for reaching the nominal maximum cooling performance quickly without relying on the control algorithm and the speed adjuster 6.

It is noted that the system of FIG. 1 is exemplary only and many modifications can be thought of. For example, the switches S2-S5 could be integrated into the fans 2b-2e, in which case the controller 4 would send signals for controlling these switches. Also the speed adjuster 6 could for example be integrated into the controller 4. Furthermore, the arrangement of the fans 2 could be different, i.e. not in an array. Also, the switch-fan-interrelation could be different. For example, the fan to the very right in Fig. 1 could be enabled second or other enabling orders could be thought of.

FIG. 2 shows a block diagram of an exemplary embodiment of the invention, which puts emphasis on the signal flow and shows the embodiment in a more abstract way. Subtracting means subtract the reference temperature or pressure value 10 from the actual temperature or pressure value 8 to produce a deviation value, which is also referred to as control error 12. The control error 12 is input to the controller 4. The controller 4 processes the control error 12 and produces two outputs. One output is the fan enable/disable signal 16, which comprises a plurality of individual enable/disable signals, one for each fan. The other output is a fan speed control value 14, which is input to the speed adjuster 6. The speed adjuster 6 generates a fan driving signal 18 based on the fan speed control value 14. Said fan driving signal 18 is of such a value and form that it drives the fans with a fan speed corresponding to the fan speed control value 14. The plurality of fans 2 receives the fan enable/disable signal 16 and the fan driving signal 18. Based on these signals, an appropriate number of fans is run at an appropriate fan speed, as determined by the controller 4. This has an influence on the actual temperature and/or pressure in/at the air cooled heat exchanger. Therefore, the actual temperature or pressure value 8 is influenced by the fans, which constitutes feedback to the controller 4 and closes the control loop.

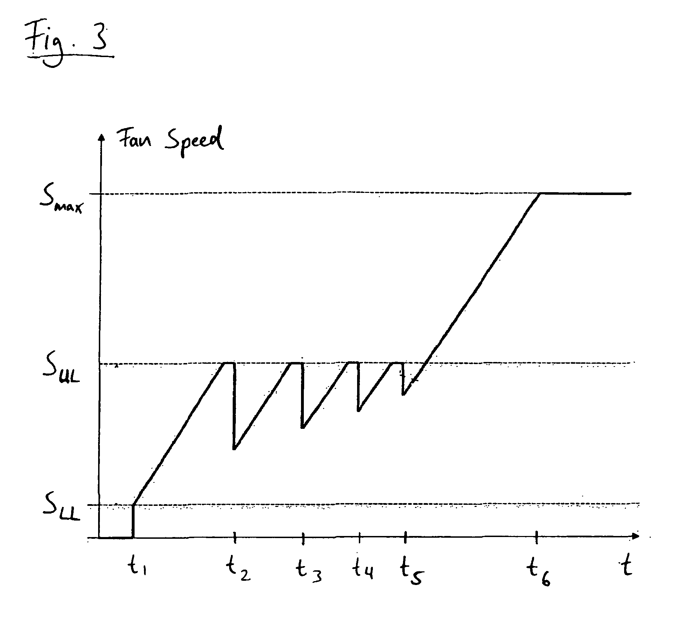

FIG. 3 shows an exemplary course of the fan speed of an air cooled heat exchanger over time. At time $t_1$, the fan speed jumps from zero to the lower fan speed limit value $S_{LL}$. From there it increases linearly until it reaches the upper fan speed limit value $S_{UL}$ shortly before time $t_2$. The fan speed stays constant at $S_{UL}$ and falls down to about 50% of the upper fan speed limit value $S_{UL}$ at time $t_2$. From there it increases again linearly, until it reaches $S_{UL}$ shortly before $t_3$. The fan speed stays constant at $S_{UL}$ until $t_3$, when it drops down to about two thirds of the upper fan speed limit value $S_{UL}$. Two similar cycles follow: the fan speed rises, reaches $S_{UL}$ shortly before $t_4$, stays constant until $t_4$, drops down to about 75% of $S_{UL}$, rises linearly, reaches $S_{UL}$ shortly before $t_5$, stays constant at $S_{UL}$ until $t_5$, and falls down to about 80% of the upper fan speed limit value $S_{UL}$ at time $t_5$. From $t_5$ on the fan speed rises linearly again, passing the upper fan speed limit value $S_{UL}$, until it reaches the maximum fan speed $S_{max}$ at time point $t_6$. From $t_6$ on the fan speed stays constant at the maximum fan speed $S_{max}$.

The just described course of the fan speed is based on the assumption that the control is started at time point $t_1$ and that a positive control error persists throughout the whole time frame depicted in FIG. 3. That means, for example, that the actual temperature value at the air cooled heat exchanger is greater than the desired reference temperature value throughout the time period of FIG. 3. Despite being a fairly academic example, FIG. 3 shows the operation of the controller 4 well, especially the two-stage approach implemented in the controller 4 and described below.

As mentioned above, at $t_1$ the control is started. The controller 4 closes switch S1 (cf. FIG. 1) and sets the fan speed control value 14 to the lower fan speed limit value $S_{LL}$. From $t_1$ on a control algorithm, which is implemented in the controller 4 and has been described with regard to FIG. 1, calculates the fan speed control value 14 based on the control error 12. In this example the fan speed is gradually increased by that control algorithm, which is a product of the persisting positive control error. This control algorithm can be seen as a first stage of the control functionality implemented in the controller 4.

The second stage of the controlling functionality becomes apparent shortly before $t_2$, when the fan speed control value, as calculated by the control algorithm, reaches the upper fan speed limit value $S_{UL}$. This second stage monitors the outcome of the control algorithm and overrules it, when appropriate in the light of additional considerations. When the fan speed control value, as calculated by the control algorithm, exceeds the upper fan speed limit value $S_{UL}$, the controller 4 overrules said value and sets it to the upper fan speed limit value $S_{UL}$, until the output of the control algorithm drops below $S_{UL}$ again or until a predetermined time period, called time delay, has passed. During that time the controller 4 outputs the upper fan speed limit value $S_{UL}$ as the fan speed control value 14 to the speed adjuster 6. The fan speed control value, as computed by the control algorithm, reaching the upper fan speed limit value $S_{UL}$ indicates to the controller 4 that one fan is not sufficient to reach the desired reference temperature or pressure value. However, enabling the second fan 2b is delayed by the controller 4 until time point $t_2$. In the meantime the controller 4 keeps the fan speed control value 14 constant at $S_{UL}$. This feature is optional for the present invention; it may be beneficial, though, depending on the circumstances. If the fan speed control value, as computed by the control algorithm, dropped below the upper fan speed limit value $S_{UL}$ again before the time delay, the controller 4 would not enable an additional fan and would output that fan speed control value to the speed adjuster 6. Introducing said time delay is especially beneficial when short-term pressure or temperature fluctuations in the air cooled heat exchanger can be expected or when the system of the air cooled heat exchanger is slow in responding to changes of the fan speed. The time delay also helps to prevent unnecessary enable/disable operations of the fans.

At time point $t_2$ the controller 4 closes switch S2 and, therewith, enables fan 2b. Together with said enabling of the second fan, the controller 4 also reduces the fan speed control value, which is output to the speed adjuster 6. This lowering of the fan speed control value

14 is carried out according to the formula

$$S_C = \frac{S_{UL}*(N_{RF}-1)}{N_{RF}} \; ,$$

wherein $S_c$ is the fan speed control value and $N_{RF}$ is the number of running fans including the fan enabled with the lowering of the fan speed control value 14. Accordingly, $N_{RF}$ equals 2 in the lowering operation at $t_2$. As a consequence, the fan speed control value is set to 50% of the upper fan speed limit value $S_{UL}$ at time point $t_2$. The formula for the lowering operation of the fan speed control value 14 is designed in such a way that the total cooling performance of the plurality of fans 2 is kept roughly constant, when an additional fan is enabled. At time point $t_2$, fan 2b is enabled and the two fans 2a and 2b are run at half of the fan speed that fan 2a was run at before the enabling of fan 2b. This allows for preventing a discontinuity in cooling performance at $t_2$ on a first order scale. Secondary considerations like, for example, the non-linearity of the cooling performance of the fans with regard to their fan speed or the dependency of the total cooling performance on the area of the air cooled heat exchanger affected by the fans (the more fans are running, the bigger the cooled area is) may lead to modifications of the formula given above. These modifications may lead to being even more efficient at keeping the total cooling performance constant, when enabling an additional fan.

Also at $t_2$, the control algorithm is given the information that the controller 4 overruled its output and sets the fan speed control value 14 to 50% of the upper fan speed limit value $S_{UL}$. The control algorithm keeps adjusting the fan speed control value 14 from $t_2$ on, using 50% of $S_{UL}$ as its starting output value. As before, i.e. between $t_1$ and $t_2$, the control algorithm bases its adjustments to the fan speed control value 14 on the current and/or previous control error values.

The operations performed by the controller 4 at time points $t_3$, $t_4$, and $t_5$ are conceptually identical as at $t_2$. At $t_3$ the controller 4 enables the third fan 2c and runs the now enabled three fans at a fan speed of two thirds of the upper fan speed limit value $S_{UL}$. Enabling additional fans and reducing the fan speed control value is carried out accordingly at $t_4$ and $t_{5s}$. Based on the control error value 12 the control algorithm raises the fan speed control value after $t_5$. As there are no additional fans available, which could be enabled by the controller 4, the controller 4 refrains from overruling the fan speed control value computed by the control algorithm, when the fan speed control value reaches the upper fan speed limit value $S_{UL}$ soon after time point $t_5$. With all fans enabled, the control algorithm increases the fan speed control value further, until it reaches the maximum fan speed $S_{max}$ at time point $t_6$. From $t_6$ on the controller 4 overrules again the fan speed control value, as computed by the control algorithm. The controller 4 either sets the fan speed control value to the maximum fan speed $S_{max}$ and outputs said value to the speed adjuster 6 or it closes switch Sn+1 to connect all fans to the power supply, which will run the fans at their nominal fan speed (assuming the maximum fan speed $S_{max}$ and the nominal fan speed to be equal in this example). Switch Sn+1 is in general used in emergency situations, e.g. the speed adjuster not working properly. Such a situation may be detected by an intelligent sensor, which triggers an alarm, which in turn leads to switch Sn+1 being closed.

The control algorithm may be different depending on the number of fans running. However, in the exemplary embodiment of Fig. 3, the same control algorithm is used irrespective of the number of fans running.

Similar considerations apply when the control algorithm decreases the fan speed control value and said value reaches the lower fan speed limit value $S_{LL}$. In this case, operations analogous to the fan speed control value reaching the upper fan speed limit value $S_{UL}$ may be performed by the controller 4. For the sake of brevity, a detailed description thereof shall be omitted. However, a number of comments are made below. When two or more fans are running and the control algorithm outputs the lower fan speed limit value $S_{LL}$ as the fan speed control value, the controller 4 may disable one of the running fans and raise the fan speed control value (before outputting it to the speed adjuster 6) according to the formula

$$S_C = \frac{S_{LL}*(N_{RF}+1)}{N_{RF}} \quad ,$$

wherein $S_{LL}$ is greater than 0 and $N_{RF}$ is the number of running fans excluding the fan that is disabled with the raising of the fan speed control value. Also, a time delay may be introduced between reaching the lower fan speed limit value $S_{LL}$ and the disabling of one of the fans.

When only one fan is running and the fan speed control value 14, as computed by the control algorithm, reaches $S_{LL}$, the controller 4 may either disable the last running fan or it may allow values between the lower fan speed limit value $S_{LL}$ and zero. Due to the typical fan engine characteristics disabling may be the preferred choice in many applications.

It is pointed out that the above described behavior, when reaching the upper fan speed limit value $S_{UL}$, and the above described behavior, when reaching the lower fan speed limit value $S_{LL}$, are not necessarily implemented in one embodiment of the invention. In a preferred embodiment an additional fan is enabled and the fan speed control value is lowered after a time delay, when it reaches the upper fan speed limit value $S_{UL}$, whereas the controller 4 only disables one of the running fans without updating the fan speed control value, when the lower fan speed limit value $S_{LL}$ is reached. It is then left up to the control algorithm to adjust the fan speed control value starting at the lower fan speed limit value $S_{LL}$, depending on the current and/or previous control errors.

It is noted that the embodiments of the invention may conceptually by applied to all combinations of primary and secondary mediums in the heat exchanger. The secondary medium, which is blown over the heat exchanger by the fans, is typically air, but may also be air enriched with additional substances for generating a greater thermal capacity or any other suitable fluid. The primary medium may also be any fluid suitable to the refrigerating system of the according embodiment. Said primary substance may be $CO_2$, which may be in a transcritical state or in a subcritical state in the heat exchanger.

Exemplary embodiments of the invention as described above allow for an efficient and accurate control of an air cooled heat exchanger, especially under partial load conditions. They further allow for running an optimal number of fans and running those fans at an appropriate fan speed, depending on the system itself and on the momentary system conditions. The intertwined control of the number of fans running and the fan speed allows for the control to avoid an undesired fan speed range above the upper fan speed limit value, unless necessary under high load conditions. The control allows for an excellent trade-off between the power needed, the efficiency of the fans, the noise generated by the fans, and the number of enabling/disabling events necessary. Furthermore, efficient and continuous control of the air cooled heat exchanger is assured by combining an enabling/disabling event with adjustments in fan speed. The exemplary embodiments have furthermore been proven to be extremely advantageous in the case of a heat exchanger for heat recovery being inserted before the air cooled heat exchanger, which in the prior art imposes big problems for the controls of the air cooled heat exchanger.

In a further embodiment of the invention, the lowering of the fan speed control value is done in a way that the total fan cooling performance is prevented from having large discontinuities. This ensures that a change in the number of running fans does not have an immediate drastic effect on the actual temperature or pressure value in/at the air cooled heat exchanger, which would cause a discontinuity in the control error. Not having to deal with these discontinuities ensures that the control can operate accurately in a continuous fashion over a wide range of operating conditions.

It is also possible that the lowering of the fan speed control value is carried out according to the formula

$$S_C = \frac{S_{UL}*(N_{RF}-1)}{N_{RF}} \quad ,$$

wherein $S_c$ is the fan speed control value and $N_{RF}$ is the number of running fans including the fan enabled in combination with the lowering of the fan speed control value. Assuming that the cooling performance of a fan depends linearly on its fan speed, this formula ensures that the effects of enabling another fan and lowering the fan speed control value on the total cooling performance cancel each other out and that a continuous total fan cooling performance is ensured. Even in the presence of secondary effects, this formula provides an excellent means for ensuring continuous control.

In a further embodiment, the upper fan speed limit value is between a lower fan speed limit value plus 40% of the maximum fan speed and the lower fan speed limit value plus 60% of the maximum fan speed. Preferably, the lower fan speed limit value is below 20% of the maximum fan speed, and more preferably, it is between 10% and 15% of the maximum fan speed. Fan speeds below the lower fan speed limit value are prone to cause resonance problems in the air cooled heat exchanger and the surrounding system, and are therefore avoided by the control. The aforementioned value range for the upper fan speed limit value has been found to provide a good threshold, where running more fans with a fan speed below said upper fan speed limit value is more beneficial than running less fans at a fan speed above said upper fan speed limit value. This threshold value incorporates a compromise between the power needed by the air cooled heat exchanger, the efficiency of the fans, and the noise generated by the fans. As is apparent to persons skilled in the art, this border value may be adjusted for every system individually. For specific embodiments, it has been found beneficial if the upper fan speed limit value is the lower fan speed limit value plus 50% of the maximum fan speed.

In yet another embodiment of the invention, the fan speed control value is bound by the maximum fan speed, when all fans are enabled. That means that the considerations leading to setting the upper fan speed limit value may be ignored if running all fans at a fan speed above the upper fan speed limit value is necessary for reaching a desired cooling performance. In other words, the fan speed control value may exceed the upper fan speed limit value, when all fans are enabled.

In an exemplary embodiment of the invention, an enabling time delay is introduced between the fan speed control value reaching the upper fan speed limit value and the enabling of an additional fan. This enabling time delay takes into account that the response of an actual temperature or pressure value in the air cooled heat exchanger to any changes in the fan cooling performance exhibits a finite delay period. As this actual temperature or pressure value is fed back to the control of the fans, introducing the enabling time delay allows for preventing unnecessary enable actions of additional fans by the control method. It is also possible that the fan speed control value is kept constant at the upper fan speed limit value during the enabling time delay.

With according features added to the method of controlling the air cooled heat exchanger with regard to disabling one of the running fans, when the fan speed control value reaches the lower fan speed limit value, analogous advantages can be attained. An in-depth description thereof shall be omitted for brevity.

Moreover, the step of calculating a fan speed control value from the deviation may employ a PI-control algorithm.

It is also possible that the step of driving the enabled fans comprises providing a fan speed control value signal to a speed adjuster that controls the fans according to the fan speed control value signal. Having the speed adjuster as a separate unit allows for placing that unit at an optimum location and optimizing it with regards to its power electronics functionality.

In another embodiment of the invention, the actual temperature or pressure value is sensed by a temperature or pressure sensor, respectively. A pressure sensor may be placed in the refrigerant portion of the air cooled heat exchanger and be adapted to communicate the sensed values to a unit capable of carrying out the control method. A temperature sensor may be located within the refrigerant portion or around the refrigerant portion of the air cooled heat exchanger.

Alternatively, the actual pressure in the air cooled heat exchanger may be sensed, and the sensed pressure value may be used to derive the momentary condensation temperature in the air cooled heat exchanger. This derivation is possible as temperature and pressure are interrelated. It may for example be beneficial in cases, when a certain amount of cooling below the condensation temperature is the control target and the actual temperature is measured at some location in the system, for example around a second heat exchanger. Since pressure sensors usually have a quicker response to pressure value changes than temperature sensors to temperature value changes, this setup may be beneficial in giving the control a faster feedback about the the air cooled heat exchanger.

The method of the invention may be carried out by a refrigerating system comprising an air cooled heat exchanger having a plurality of fans, wherein the air cooled heat exchanger has a controller associated therewith. The advantages associated with the various embodiments of the invention may equally be attained by adapting said refrigerating system in such a way that it is capable of carrying out these features. The refrigerating system may further comprise a speed adjuster controlling the fans according to a fan speed control value signal.

While the invention has been described with reference to exemplary embodiments, it will be understood by those skilled in the art that various changes may be made and equivalents may be substituted for elements thereof without departing from the scope the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

Reference Numerals

| 2  | Plurality of fans |
|----|---|
| 4  | Controller |
| 6  | Speed adjuster |
| 8  | Actual temperature or pressure value |
| 10 | Reference temperature or pressure value |
| 12 | Control error |
| 14 | Fan speed control value |
| 16 | Fan enable/disable signal |
| 18 | Fan driving signal |

**Claims**

1.  Method of controlling an air cooled heat exchanger, the method comprising the steps of:

    providing an air cooled heat exchanger having a plurality of fans (2) **characterized in that** each fan is adjustable in fan speed, has a maximum fan speed ($S_{max}$) and has an individual enable/disable switch (S1-S5), and further comprising the steps of running at least one fan (2),
    determining a deviation (12) by comparing an actual temperature or pressure value (8), sensed by a temperature or pressure sensor in a refrigerant portion of the air cooled heat exchanger, with a reference temperature or pressure value (10),
    calculating a fan speed control value (14) from the deviation, if the fan speed control value (14) reaches an upper fan speed limit value ($S_{UL}$): lowering the fan speed control value (14) and enabling an additional fan, and
    running all of the enabled fans based on the fan speed control value (14).

2.  Method according to claim 1, wherein the lowering of the fan speed control value (14) is done in a way that the total fan cooling performance is prevented from having large discontinuities.

3.  Method according to claim 1 or 2, wherein the lowering of the fan speed control value (14) is carried out according to the formula

    $$S_C = \frac{S_{UL} * (N_{RF} - 1)}{N_{RF}} \quad ,$$

    wherein $S_c$ is the fan speed control value (14) and $N_{RF}$ is the number of running fans including the fan enabled in combination with the lowering of the fan speed control value (14).

4.  Method according to any of the previous claims, wherein the upper fan speed limit value ($S_{UL}$) is between a lower fan speed limit value ($S_{LL}$) plus 40% of the maximum fan speed ($S_{max}$) and the lower fan speed limit value ($S_{LL}$) plus 60% of the maximum fan speed ($S_{max}$).

5.  Method according to claim 4, wherein the upper fan speed limit value ($S_{UL}$) is the lower fan speed limit value ($S_{LL}$) plus 50% of the maximum fan speed ($S_{max}$).

6.  Method according to any of the previous claims, wherein the fan speed control value (14) is bound by the maximum fan speed ($S_{max}$), when all fans are enabled.

7.  Method according to any of the previous claims, wherein an enabling time delay is introduced between the fan speed control value (14) reaching the upper fan speed limit value ($S_{UL}$) and the enabling of an additional fan.

8.  Method according to claim 7, wherein the fan speed control value (14) is kept constant at the upper fan speed limit value ($S_{UL}$) during the enabling time delay.

9.  Method of controlling an air cooled heat exchanger, the method comprising the steps of:

    providing an air cooled heat exchanger having a plurality of fans (2) **characterized in that** each fan is adjustable in fan speed, has a maximum fan speed ($S_{max}$) and has an individual enable/disable switch (S1-S5), and further comprising the steps of running at least two fans (2),
    determining a deviation (12) by comparing an actual temperature or pressure value (8), sensed by a temperature or pressure sensor in a refrigerant portion of the air cooled heat exchanger, with a reference temperature or pressure value (10),
    calculating a fan speed control value (14) from the deviation, if the fan speed control value (14) reaches a lower fan speed limit value ($S_{LL}$): raising the fan speed control value (14) and disabling one of the fans, and
    running all of the enabled fans based on the fan speed control value (14).

10. Method according to any of the previous claims, wherein the step of calculating employs a PI control algorithm.

11. Method according to any of the previous claims, wherein the step of driving the enabled fans comprises providing a fan speed control value (14) signal to a speed adjuster (6) that controls the fans according to the fan speed control value (14) signal.

12. Method according to any of the claims 1 to 11, wherein the actual pressure in the air cooled heat exchanger is sensed and the sensed pressure value is used to derive the momentary condensation temperature in the air cooled heat exchanger.

13. Refrigerating system comprising an air cooled heat exchanger having a plurality of fans (2), the air cooled heat exchanger having a controller (4) associated therewith, wherein the controller is adapted to carry out the method claimed in any of the claims 1 to 12.

14. Refrigerating system according to claim 13, further comprising a speed adjuster (6) controlling the fans according to a fan speed control value (14) signal.

**Patentansprüche**

1. Verfahren zum Steuern eines luftgekühlten Wärmetauschers, wobei das Verfahren die folgenden Schritte umfasst:

Bereitstellen eines luftgekühlten Wärmetauschers mit einer Mehrzahl von Ventilatoren (2), **dadurch gekennzeichnet, dass** die Ventilator-Geschwindigkeit jedes Ventilators einstellbar ist und jeder Ventilator über eine maximale Ventilator-Geschwindigkeit ($S_{max}$) verfügt sowie einen individuellen Aktivierungs-/Deaktivierungsschalter (S1-S5) aufweist, und außerdem folgende Schritte umfasst:

Betreiben mindestens einen Ventilators (2), Bestimmen einer Abweichung (12) anhand des Vergleichs eines tatsächlichen Temperatur- oder Druck-Werts (8), der von einem Temperatur- oder Drucksensor in einem gekühlten Teil des luftgekühlten Wärmetauschers aufgenommen wird, mit einem Referenz-Temperatur- oder einem Referenz-Druck-Wert (10), Berechnen eines Ventilator-Geschwindigkeits-Steuerungs-Werts (14) basierend auf der Abweichung, falls der Ventilator-Geschwindigkeits-Steuerungs-Wert (14) einen oberen Ventilator-Geschwindigkeitsgrenzwert ($S_{UL}$) erreicht: Senken des Ventilator-Geschwindigkeits-Steuerungs-Werts (14) und Aktivieren eines zusätzlichen Ventilators, sowie Betreiben aller aktivierten Ventilatoren basierend auf dem Ventilator-Geschwindigkeits-Steuerungswert (14).

2. Verfahren nach Anspruch 1, wobei das Senken des Ventilator-Geschwindigkeits-Steuerungs-Werts (14) so vorgenommen wird, dass es verhindert wird, dass die gesamte Ventilator-Kühlleistung große Diskontinuitäten aufweist.

3. Verfahren nach Anspruch 1 oder 2, wobei das Senken des Ventilator-Geschwindigkeits-Steuerungs-Werts (14) gemäß der folgenden Formel durchgeführt wird:

$$S_C = \frac{S_{UL} * (N_{RF} - 1)}{N_{RF}}$$

wobei $S_c$ den Ventilator-Geschwindigkeits-Steuerungs-Wert (14) und $N_{RF}$ die Anzahl der laufenden Ventilatoren darstellt, einschließlich jenes Ventilators, der in Kombination mit dem Senken des Ventilator-Geschwindigkeits-Steuerungs-Werts (14) aktiviert wird.

4. Verfahren nach einem der vorangehenden Ansprüche, wobei der obere Ventilator-Geschwindigkeitsgrenzwert ($S_{UL}$) zwischen einem unteren Ventilator-Geschwindigkeitsgrenzwert ($S_{LL}$) plus 40 % der maximalen Ventilator-Geschwindigkeit ($S_{max}$) und dem unteren Ventilator-Geschwindigkeitsgrenzwert ($S_{LL}$) plus 60 % der maximalen Ventilator-Geschwindigkeit ($S_{max}$) liegt.

5. Verfahren nach Anspruch 4, wobei der obere Ventilator-Geschwindigkeitsgrenzwert ($S_{UL}$) dem unteren Ventilator-Geschwindigkeitsgrenzwert ($S_{LL}$) plus 50 % der maximalen Ventilator-Geschwindigkeit ($S_{max}$) entspricht.

6. Verfahren nach einem der vorangehenden Ansprüche, wobei der Ventilator-Geschwindigkeits-Steuerungs-Wert (14) von der maximalen Ventilator-Geschwindigkeit ($S_{max}$) begrenzt wird, wenn alle Ventilatoren aktiviert sind.

7. Verfahren nach einem der vorangehenden Ansprüche, wobei eine Aktivierungszeit-Verzögerung zwischen dem Ventilator-Geschwindigkeits-Steuerungs-Wert (14), der den oberen Ventilator-Geschwindigkeitsgrenzwert ($S_{UL}$) erreicht, und dem Aktivieren eines zusätzlichen Ventilators eingeführt wird.

8. Verfahren nach Anspruch 7, wobei der Ventilator-Geschwindigkeits-Steuerungs-Wert (14) während der Aktivierungszeit-Verzögerung konstant auf dem oberen Ventilator-Geschwindigkeitsgrenzwert ($S_{UL}$) gehalten wird.

9. Verfahren zum Steuern eines luftgekühlten Wärmetauschers, wobei das Verfahren die folgenden Schritte umfasst:

Bereitstellen eines luftgekühlten Wärmetauschers mit einer Mehrzahl von Ventilatoren (2), **dadurch gekennzeichnet, dass** die Geschwindigkeit jedes Ventilators einstellbar ist und jeder Ventilator über eine maximale Ventilator-Geschwindigkeit ($S_{max}$) verfügt sowie einen individuellen Aktivierungs-/Deaktivierungsschalter (S1-S5) aufweist, und außerdem folgende Schritte umfasst:

Betreiben von mindestens zwei Ventilatoren (2),
Bestimmen einer Abweichung (12) anhand des Vergleichs eines tatsächlichen Temperatur- oder Druckwerts (8), der von einem Temperatur- oder Drucksensor in einem gekühlten Teil des luftgekühlten Wärmetauschers aufgenommen wird, mit einem Referenz-Temperatur- oder einem Referenz-Druck-Wert (10),
Berechnen eines Ventilator-Geschwindigkeits-Steuerungs-Werts (14) basierend auf der Abweichung,
falls der Ventilator-Geschwindigkeits-Steuerungs-Wert (14) einen unteren Ventilator-Geschwindigkeitsgrenzwert ($S_{LL}$) erreicht: Erhöhen des Ventilator-Geschwindigkeits-Steuerungs-Werts (14) und Deaktivieren von einem der Ventilatoren, sowie Betreiben aller aktivierter Ventilatoren basierend auf dem Ventilator-Geschwindigkeits-Steuerungs-Wert (14).

10. Verfahren nach einem der vorangehenden Ansprüche, wobei der Schritt des Berechnens einen PI-Steuerungsalgorithmus umfasst.

11. Verfahren nach einem der vorangehenden Ansprüche, wobei der Schritt des Antreibens der aktivierten Ventilatoren das Bereitstellen eines Signals des Ventilator-Geschwindigkeits-Steuerungs-Werts (14) an eine Geschwindigkeits-Einstelleinrichtung (6) umfasst, welche die Ventilatoren gemäß dem Signal des Ventilator-Geschwindigkeits-Steuerungs-Werts (14) steuert.

12. Verfahren nach einem der Ansprüche 1 bis 11, wobei der tatsächliche Druck im luftgekühlten Wärmetauscher aufgenommen wird und der aufgenommene Druckwert dazu benutzt wird, die momentane Kondensationstemperatur in dem luftgekühlten Wärmetauscher davon abzuleiten.

13. Kühlsystem, das einen luftgekühlten Wärmetauscher umfasst, der eine Mehrzahl von Ventilatoren (2) aufweist, wobei der luftgekühlte Wärmetauscher über eine diesem zugeordnete Steuerung (4) verfügt, wobei die Steuerung so angepasst ist, dass sie das in einem der Ansprüche 1 bis 12 beanspruchte Verfahren ausführen kann.

14. Kühlsystem nach Anspruch 13, das außerdem eine Geschwindigkeits-Einstelleinrichtung (6) umfasst, welche die Ventilatoren gemäß eines Ventilator-Geschwindigkeits-Steuerungs-Wert- (14) Signals steuert.

## Revendications

1. Procédé de régulation d'un échangeur de chaleur refroidi à l'air, le procédé comprenant les étapes suivantes :

l'utilisation d'un échangeur de chaleur refroidi à l'air comportant une pluralité de ventilateurs (2) **caractérisés en ce que** chaque ventilateur est ajustable en matière de vitesse de ventilateur, a une vitesse maximale de ventilateur ($S_{max}$) et a un commutateur individuel d'activation/désactivation (S1-S5) et comprenant en outre les étapes de fonctionnement d'au moins un ventilateur (2),
101a détermination d'un écart (12) par comparaison d'une valeur de température ou de pression réelle (8) détectée par un capteur de température ou de pression dans une partie réfrigérante de l'échangeur de chaleur refroidi à l'air, avec une valeur de température ou de pression de référence (10),
le calcul d'une valeur de régulation de vitesse de ventilateur (14) à partir de l'écart, si la valeur de régulation de vitesse de ventilateur (14) atteint une limite supérieure de vitesse de ventilateur ($S_{UL}$) : abaissement de la valeur de régulation de vitesse de ventilateur (14) et activation d'un ventilateur supplémentaire, et
le fonctionnement de tous les ventilateurs activés en fonction de la valeur de régulation de vitesse de ventilateur (14).

2. Procédé selon la revendication 1, dans lequel l'abaissement de la valeur de régulation de vitesse de ventilateur (14) se fait d'une manière telle qu'on empêche les performances totales de refroidissement de ventilateur d'avoir de grandes discontinuités.

3. Procédé selon la revendication 1 ou 2, dans lequel l'abaissement de la valeur de régulation de vitesse de ventilateur (14) a lieu selon la formule

$$S_C = \frac{S_{UL} \times (N_{RF} - 1)}{N_{RF}} \, ,$$

où $S_c$ représente la valeur de régulation de vitesse de ventilateur (14) et où $N_{RF}$ représente le nombre de ventilateurs tournant comprenant le ventilateur activé en combinaison avec l'abaissement de la valeur de régulation de vitesse de ventilateur (14).

4. Procédé selon l'une quelconque des revendications précédentes, dans lequel la valeur limite supérieure de vitesse de ventilateur ($S_{UL}$) est comprise entre une valeur limite inférieure de vitesse de ventilateur ($S_{LL}$) plus 40 % de la vitesse maximale de ventilateur ($S_{max}$) et la valeur limite inférieure de vitesse de ventilateur ($S_{LL}$) plus 60 % de la vitesse maximale de ventilateur ($S_{max}$).

5. Procédé selon la revendication 4, dans lequel la valeur limite supérieure de vitesse de ventilateur ($S_{UL}$) est la valeur limite inférieure de vitesse de ventilateur ($S_{LL}$) plus 50 % de la vitesse maximale de ventilateur ($S_{max}$).

6. Procédé selon l'une quelconque des revendications précédentes, dans lequel la valeur de régulation de vitesse de ventilateur (14) est liée par la vitesse maximale de ventilateur ($S_{max}$) lorsque tous les ventilateurs sont activés.

7. Procédé selon l'une quelconque des revendications précédentes, dans lequel le retard d'activation est introduit entre la valeur de régulation de vitesse de ventilateur (14) atteignant la valeur limite supérieure de vitesse de ventilateur ($S_{UL}$) et l'activation d'un ventilateur supplémentaire.

8. Procédé selon la revendication 7, dans lequel la valeur de régulation de vitesse de ventilateur (14) est maintenue constante à la valeur limite supérieure de vitesse de ventilateur ($S_{UL}$) pendant le retard d'activation.

9. Procédé de régulation d'un échangeur de chaleur refroidi à l'air, ce procédé comprenant les étapes suivantes :

   l'utilisation d'un échangeur de chaleur refroidi à l'air comportant une pluralité de ventilateurs (2), **caractérisé en ce que** chaque ventilateur est ajustable en matière de vitesse de ventilateur, a une vitesse maximale de ventilateur ($S_{max}$) et comporte un commutateur individuel d'activation/désactivation(S1-S5), et comprenant en outre le fonctionnement d'au moins deux ventilateurs (2),

   la détermination d'un écart (12) par comparaison d'une valeur de température ou de pression réelle (8), détectée par un capteur de température ou de pression dans une partie réfrigérante de l'échangeur de chaleur refroidi, avec une valeur de température ou de pression de référence (10),

   le calcul d'une valeur de régulation de vitesse de ventilateur (14) à partir de l'écart, si la valeur de régulation de vitesse de ventilateur (14) atteint une valeur limite inférieure de vitesse de ventilateur ($S_{LL}$) : élévation de la valeur de régulation de vitesse de ventilateur (14) et désactivation d'un des ventilateurs, et

   le fonctionnement de tous les ventilateurs activés en fonction de la valeur de régulation de vitesse de ventilateur (14).

10. Procédé selon l'une quelconque des revendications précédentes, dans lequel l'étape de calcul emploie un algorithme de régulation de PI.

11. Procédé selon l'une quelconque des revendications précédentes, dans lequel l'étape d'entraînement des ventilateurs activés comprend l'utilisation d'un signal de valeur de régulation de vitesse de ventilateur (14) émis vers un ajusteur de vitesse (6) qui régule les ventilateurs en fonction du signal de valeur de régulation de vitesse de ventilateur (14).

12. Procédé selon l'une quelconque des revendications 1 à 11, dans lequel la pression réelle dans l'échangeur de chaleur refroidi est détectée et où la valeur de pression détectée est utilisée pour dériver la température momentanée de condensation dans l'échangeur de chaleur refroidi à l'air.

13. Système réfrigérant comprenant un échangeur de chaleur refroidi à l'air comportant une pluralité de ventilateurs (2), l'échangeur de chaleur refroidi comportant un contrôleur (4) qui lui est associé, le contrôleur étant conçu pour mener à bien le procédé revendiqué dans l'une quelconque des revendications 1 à 12.

14. Système réfrigérant selon la revendication 13, comprenant en outre un ajusteur de vitesse (6) régulant les ventilateurs selon un signal de valeur de régulation de vitesse de ventilateur (14).

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5230223 A